# EUROPÄISCHE PATENTANMELDUNG

(11) **EP 0 622 965 A2**
(43) Veröffentlichungstag der Anmeldung: **02.11.1994**
(21) Anmeldenummer: 94104637.7
(22) Anmeldetag: 23.03.1994
(51) Int. Cl.: H04Q 3/68

(54) **Koppelfeld und Verfahren zum Ausbau des Koppelfeldes**

(30) Priorität: 30.04.1993 DE 4314354
(71) Anmelder: SIEMENS AKTIENGESELLSCHAFT, D-80333 München (DE)
(72) Erfinder: Treyer, Thomas, D-81379 München (DE)

(57) **Zusammenfassung**

Es wird ein modular in Stufen aufgebautes Koppelfeld und ein Verfahren zum Ausbau dieses Koppelfeldes vorgeschlagen. Die Struktur der Verbindungsleitungen zwischen den Stufen ist in einem Rahmen angeordnet. Die Koppelmodule sind jeweils über eine stufenspezifische Anschlußeinrichtung mit dem Rahmen verbunden. In einem vorläufigen Ausbauzustand des Koppelfeldes sind sowohl in der A-Koppelstufe als auch in der B-Koppelstufe an den Rahmen weniger als die maximal mögliche Anzahl von Koppelmodulen angeschlossen. Die nicht mit Koppelmodulen der B-Koppelstufe belegten Anschlußeinrichtungen sind über Kabelbrücken mit nicht mit Koppelmodulen der A-Koppelstufe belegten Anschlußeinrichtungen verbunden. Der Ausbau des Koppelfeldes erfolgt durch Entfernung einer Kabelbrücke und Anschluß von Koppelmodulen an die frei gewordenen Anschlußeinrichtungen.

## Beschreibung

Die Erfindung betrifft ein Koppelfeld mit einer Vielzahl von in einer Mehrzahl von Koppelstufen angeordneten Koppelmodulen, bei dem die Verbindungsleitungen zwischen den Koppelmodulen der einzelnen Koppelstufen in einer als Permutation bezeichneten Koppelstruktur angeordnet sind. Weiter betrifft die Erfindung ein Verfahren zum Ausbau des Koppelfeldes über die durch die Anzahl der Koppelmodule der B-Koppelstufe vorgegebene Größe hinaus. Ein Koppelfeld der eingangs umrissenen Art ist beispielsweise aus IEEE JOURNAL ON SELECTED AREAS IN COMMUNICATIONS, VOL. 9, No. 8, OCTOBER 1991, pp. 1299...1307, bekannt. Eine auch in dieser Literaturstelle angesprochene Möglichkeit zum Ausbau des Koppelfeldes besteht darin, eine für die maximale Ausbaugröße des Koppelfeldes erforderliche Anzahl von Koppelmodulen der B-Koppelstufe vorzuleisten und bei Bedarf die A-Koppelstufe des Koppelfeldes mit mit den Ein- und Ausgängen des Koppelfeldes verbundenen Koppelmodulen zu vervollständigen. Bei dieser Vorgehensweise macht sich der Kapitaleinsatz für die vorgeleisteten Koppelmodule der B-Koppelstufe nachteilig bemerkbar. Eine andere Möglichkeit zum Ausbau eines Koppelfeldes, ohne daß eine Vorleistung von Koppelmodulen der B-Koppelstufe für eine maximale Ausbaugröße aufzubringen wäre, ist ebenfalls in der genannten Literaturstelle beschrieben. Bei dieser Möglichkeit werden zwischen einem jeweiligen Koppelmodul der A-Koppelstufe und einem jeweiligen Koppelmodul der B-Koppelstufe mehrfach vorhandene Verbindungsleitungen geteilt, wobei ein Teil der Verbindungsleitungen unverändert bestehen bleibt und der andere Teil zu neu aufgestellten Koppelmodulen der B-Koppelstufe geführt wird.

Dabei ist beim Anschluß der Verbindungsleitungen zwischen Koppelmodulen der A-Koppelstufe und den neu hinzugekommenen Koppelmodulen der B-Koppelstufe eine ständige Gefahr der Vertauschung von Verbindungsleitungen gegeben.

Der Erfindung liegt das Problem zugrunde, ein Koppelfeld anzugeben und einen Weg zum Ausbau dieses Koppelfeldes aufzuzeigen, bei denen die oben angegebenen Nachteile vermieden werden.

Das Problem wird zum einen durch ein Koppelfeld gelöst, bei dem
- die Permutation der Verbindungsleitungen in einem gesonderten Rahmen angeordnet ist,
- jedes Koppelmodul über eine koppelstufenspezifische Anschlußeinrichtung mit der Permutation verbunden ist,
- von den einer jeweiligen Koppelstufe zugehörigen Anschlußeinrichtungen lediglich ein Teil mit Koppelmodulen verbunden ist,
- die nicht mit einem Koppelmodul verbundenen Anschlußeinrichtungen mit der jeweils anderen Koppelstufe zugehörigen Anschlußeinrichtungen verbunden sind.

Das erfindungsgemäße Koppelfeld bringt neben dem Vorteil der Herstellung und Prüfung auf Fehlerfreiheit der Permutation in der Fabrik den Vorteil mit sich, daß beim Anschluß von Koppelmodulen bei Vertauschungen zwischen koppelstufenspezifischen Anschlußeinrichtungen das Koppelfeld funktionsfähig bleibt.

Zum andern wird das Problem durch ein Verfahren zum Ausbau des erfindungsgemäßen Koppelfeldes gelöst, demzufolge
- die Koppelmodule der A-Koppelstufe angewiesen werden, eine Anschlußeinrichtung, an die ein Koppelmodul der B-Koppelstufe angeschlossen werden soll, nicht mehr anzusteuern,
- die Verbindungsleitungen zwischen dieser Anschlußeinrichtung und den mit diesen Verbindungsleitungen verbundenen Anschlußeinrichtungen, die zum Anschluß von den Eingängen des Koppelfeldes zugewandten Koppelmodulen vorgesehen sind, entfernt werden,
- an die Anschlußeinrichtung, an die ein Koppelmodul der B-Koppelstufe angeschlossen werden soll, ein Koppelmodul angeschlossen wird,
- das an diese Anschlußeinrichtung angeschlossene Koppelmodul von den Koppelmodulen der A-Koppelstufe zur Verkehrsdurchschaltung angesteuert wird.

Dieses Verfahren bringt den Vorteil mit sich, daß für eine für einen späteren Zeitpunkt in Aussicht genommene Erweiterung des Koppelfeldes der Aufwand für die Koppelmodule, um die das Koppelfeld erweitert werden soll, erst zum Zeitpunkt der tatsächlichen Erweiterung entsteht.

In weiterer Ausgestaltung wird an eine Anschlußeinrichtung, die zum Anschluß eines der A-Koppelstufe zugehörigen Koppelmoduls vorgesehen ist, ein Koppelmodul angeschlossen. Diese Maßnahme bringt eine Erhöhung der Anzahl von Ein- und Ausgängen des Koppelfeldes mit sich.

Die Erfindung wird nun als Ausführungsbeispiel in einem zum Verständnis erforderlichen Umfang anhand von Figuren näher beschrieben.

Dabei zeigen:
- Fig. 1: das erfindungsgemäße Koppelfeld vor dem Ausbau,
- Fig. 2: das Koppelfeld aus Fig. 1, das in der B-Koppelstufe um ein zusätzliches Koppelmodul ergänzt ist,
- Fig. 3: das Koppelfeld aus Fig. 1, das in der B-Koppelstufe um zwei zusätzliche Koppelmodule ergänzt ist, und
- Fig. 4: das Koppelfeld im voll ausgebauten Zustand.

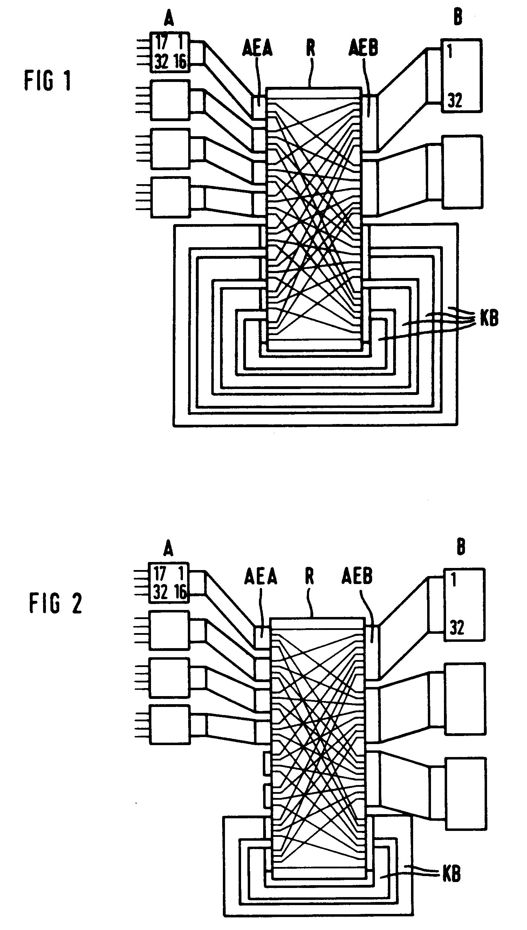

Das Koppelfeld aus Fig. 1 zeigt ein zweistufig geklapptes Koppelfeld, das bekanntlich einem dreistufigen Koppelfeld in nicht-geklappter Darstellung entspricht. Die Koppelmodule der mit A bezeichneten Koppelstufe mögen prinzipiell gleich zu den Koppelmodulen der mit B bezeichneten Koppelstufe sein. Die Koppelmodule mögen jeweils 32 Einund Ausgänge aufweisen. Die Hälfte der Ein- und Ausgänge der Koppelmodule der A-Koppelstufe bilden Ein- und Ausgänge des Koppelfeldes. Die Struktur der Verbindungsleitungen zwischen den Koppelmodulen der A-Koppelstufe und Koppelmodulen der B-Koppelstufe ist dadurch gegeben, daß jedes Koppelmodul der A-Koppelstufe mit jedem Koppelmodul der B-Koppelstufe über zumindest eine Verbindungsleitung für jede Übertragungsrichtung verbunden ist. Die in den Figuren dargestellten Verbindungsleitungen mögen jeweils durch Verbindungsleitungen zur bidirektionalen Nachrichtenübertragung gegeben sein. Zwischen den Koppelstufen ist ein in einer prioritätsgleichen Patentanmeldung (GR 93 E 1293a = GR93P1245) beschriebenen Rahmen R angeordnet, der die Struktur der Verbindungsleitungen aufnimmt. Der Rahmen weist koppelstufenspezifische Anschlußeinrichtungen auf, die jeweils zum Anschluß eines Koppelmoduls der zugehörigen Koppelstufe dienen. Der Rahmen weist Anschlußeinrichtungen in einer Anzahl auf, die der maximal vorgesehenen Anzahl von Koppelmodulen im voll ausgebauten Zustand des Koppelfeldes entspricht. Im voll ausgebauten Zustand ist jedes Koppelmodul der A-Koppelstufe mit jedem Koppelmodul der B-Koppelstufe über nur eine Verbindungsleitung für jede Übertragungsrichtung verbunden. Fig. 1 zeigt das Koppelfeld in einem Ausbauzustand, bei dem eine gegenüber dem voll ausgebauten Zustand verringerte Anzahl von Koppelmodulen eingesetzt ist. Die Anschlußeinrichtungen, die zwar zum Anschluß eines Koppelmoduls der B-Koppelstufe vorgesehen sind, an die aber momentan keine Koppelmodule angeschlossen sind, sind über Kabelbrücken KB mit Anschlußeinrichtungen verbunden, die eigentlich zum Anschluß von Koppelmodulen der A-Koppelstufe vorgesehen sind. Im Ausführungsbeispiel weisen die Koppelmodule der B-Koppelstufe gegenüber den Koppelmodulen der A-Koppelstufe eine doppelt so große Anzahl von Ein- und Ausgängen zum Anschluß von Verbindungsleitungen zwischen den Koppelstufen auf. Dementsprechend können die zum Anschluß von Koppelmodulen der B-Koppelstufe spezifizierten Anschlußeinrichtungen doppelt so viele nachrichtenübertragende Verbindungsleitungen aufnehmen, wie die zum Anschluß von Koppelmodulen der A-Koppelstufe spezifizierten Anschlußeinrichtungen. Im Ausführungsbeispiel wird also eine zum Anschluß eines Koppelmoduls der B-Koppelstufe vorgesehene Anschlußeinrichtung über eine Kabelbrücke mit zwei zum Anschluß von jeweils einem Koppelmodul der A-Koppelstufe vorgesehene Anschlußeinrichtung verbunden. Mittels der Kabelbrücke wird sichergestellt, daß kein Ein-/Ausgang eines Koppelmoduls ungenutzt bleibt. Im Ausführungsbeispiel nach Fig. 1 ist über eine Kabelbrücke ein redundanter bidirektionaler Übertragungsweg von jedem Koppelmodul der A-Koppelstufe zu jedem Koppelmodul der B-Koppelstufe gegeben.

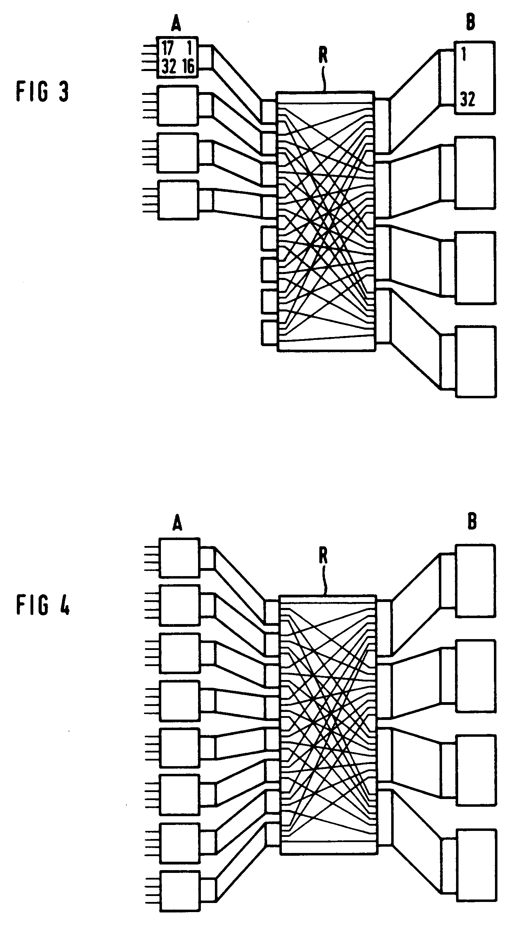

Der Ausbau des Koppelfeldes nach Fig. 1, d.h. die Erweiterung des Koppelfeldes um zusätzliche Ein- und Ausgänge des Koppelfeldes, ist ohne Unterbrechung für bestehende Verbindungen möglich. Die Vermittlungssoftware weist die Koppelmodule der A-Koppelstufe und die Koppelmodule der B-Koppelstufe an, die Ein- und Ausgänge, die mit einer zu entfernenden Kabelbrücke in Verbindung stehen, nicht mehr anzusteuern. Ist, wie im Ausführungsbeispiel beabsichtigt, zunächst die obere Kabelbrücke zu entfernen, so betrifft dies die Ein-und Ausgänge 9 bis 12 der A-Koppelstufe und die Ein- und Ausgänge 17 bis 24 der B-Koppelstufe. Diese Vorgehensweise ist insoweit aus der Verkehrstheorie als link-separation bekannt. Nach dem Entfernen dieser Kabelbrücke wird an die frei gewordene Anschlußeinrichtung zum Anschluß eines Koppelmoduls der B-Koppelstufe ein Koppelmodul der B-Koppelstufe angeschlossen. Diesen Ausbauzustand zeigt Fig. 2. Die gesperrten Ein- und Ausgänge der Koppelmodule der A-Koppelstufe werden von der Vermittlungssoftware zunächst für Verkehr zu Prüfzwecken und anschließend für regulären Verkehr freigegeben. An die frei gewordene Anschlußeinrichtungen zum Anschluß von Koppelmodulen der A-Koppelstufe können bereits jetzt Koppelmodule angeschlossen werden. Im Ausführungsbeispiel können ein oder zwei Koppelmodule angeschlossen werden. Das Koppelfeld befindet sich dann in einem erweiterten, jedoch noch nicht im voll ausgebauten Zustand. Für einen voll ausgebauten Zustand des Koppelfeldes werden sämtliche Kabelbrücken entfernt; dazu weist die Vermittlungssoftware die betreffenden Koppelmodule der A-Koppelstufe und der B-Koppelstufe an, die mit der Kabelbrücke in Verbindung stehenden Ein- und Ausgänge nicht mehr zu benutzen. Wird im Ausführungsbeispiel die untere Kabelbrücke entfernt, so erteilt die Vermittlungssoftware dazu zum einen den Koppelmodulen der A-Koppelstufe die Anweisung, die Ein- und Ausgänge 13 bis 16 nicht mehr zu benutzen, und zum andern den Koppelmodulen der B-Koppelstufe die Anweisung, die Ein- und Ausgänge 25 bis 32 nicht mehr zu benutzen. Nun wird die letzte Kabelbrücke entfernt und an die zuletzt zum Anschluß eines Koppelmoduls der B-Koppelstufe verbliebene Anschlußeinrichtung ein Koppelmodul der B-Koppelstufe angeschlossen. Das Koppelfeld weist nun einen Ausbauzustand auf, bei dem die B-Koppelstufe vollständig mit Koppelmodulen bestückt ist. Diesen Ausbauzustand zeigt Fig.3. In Fig. 4 ist ein Koppelfeld dargestellt, das gegenüber dem in Fig. 3 dargestellten Koppelfeld in seiner A-Koppelstufe vollständig mit Koppelmodulen bestückt ist. Fig. 4 zeigt also ein vollständig ausgebautes Koppelfeld, das gegenüber dem Koppelfeld im ursprünglichen Ausbauzustand eine erhöhte Anzahl von Ein-und Ausgängen aufweist. Das Koppelfeld im Ausführungsbeispiel weist im voll ausgebauten Zustand eine verdoppelte Anzahl von Ein- und Ausgängen des Koppelfeldes gegenüber dem ursprünglichen Ausbauzustand des Koppelfeldes auf. Im voll ausgebauten Zustand ist jedes Koppelmodul der A-Koppelstufe mit jedem Koppelmodul der B-Koppelstufe über nur eine Verbindungsleitung für jede Übertragungsrichtung verbunden. Die Verbindungsleitungen können, wie in der prioritätsgleichen Patentanmeldung näher ausgeführt, durch elektrische Leitungen oder Glasfaserleitungen jeweils für bidirektionale oder in verdoppelter Anzahl für unidirektionale Nachrichtenfübertragung ausgeführt sein.

## Patentansprüche

1. Koppelfeld mit einer Vielzahl von in einer Mehrzahl von Koppelstufen angeordneten Koppelmodulen, bei dem die Verbindungsleitungen zwischen den Koppelmodulen der einzelnen Koppelstufen in einer als Permutation bezeichneten Koppelstruktur angeordnet sind,
**dadurch gekennzeichnet,** daß
- die Permutation der Verbindungsleitungen in einem gesonderten Rahmen angeordnet ist,
- jedes Koppelmodul über eine koppelstufenspezifische Anschlußeinrichtung mit der Permutation verbunden ist,
- von den einer jeweiligen Koppelstufe zugehörigen Anschlußeinrichtungen lediglich ein Teil mit Koppelmodulen verbunden ist,
- die nicht mit einem Koppelmodul verbundenen Anschlußeinrichtungen mit der jeweils anderen Koppelstufe zugehörigen Anschlußeinrichtungen verbunden sind.

2. Verfahren zum Ausbau eines Koppelfeldes nach Anspruch 1,
**dadurch gekennzeichnet,** daß
- die Koppelmodule der A-Koppelstufe angewiesen werden, eine Anschlußeinrichtung (AEB), an die ein Koppelmodul der B-Koppelstufe angeschlossen werden soll, nicht mehr anzusteuern,
- die Verbindungen zwischen dieser Anschlußeinrichtung und den Anschlußeinrichtungen, die zum Anschluß von mit den Eingängen des Koppelfeldes verbundenen Koppelmodulen vorgesehen sind, entfernt werden,
- an die Anschlußeinrichtung, an die ein Koppelmodul der B-Koppelstufe angeschlossen werden soll, ein Koppelmodul angeschlossen wird und
- das neu hinzugekommene Koppelmodul von den Koppelmodulen der A-Koppelstufe zur Verkehrsdurchschaltung angesteuert wird.

3. Verfahren nach Anspruch 2,
**dadurch gekennzeichnet,** daß an eine zum Anschluß eines Koppelmoduls der A-Koppelstufe vorgesehene Anschlußeinrichtung, die durch Entfernung der Kabelbrücke frei geworden ist, ein mit Ein- und Ausgängen des Koppelfeldes verbundenes Koppelmodul angeschlossen wird.

4. Verfahren nach Anspruch 2 oder 3,
**dadurch gekennzeichnet,** daß über ein neu an das Koppelfeld angeschlossenes Koppelmodul zunächst Verkehr zu Prüfungszwecken und anschließend regulärer Verkehr geschaltet wird.
